# EUROPÄISCHE PATENTSCHRIFT

(11) **EP 1 052 139 B1**
(45) Veröffentlichungstag und Bekanntmachung des Hinweises auf die Patenterteilung: **16.06.2004**
(21) Anmeldenummer: 00107757.7
(22) Anmeldetag: 11.04.2000
(51) Int. Cl.: B60N 2/06

(54) **Sitzschienenpaar für Fahrzeugsitz**
Seat slide structure for vehicle seat
Paire de glissières de siège pour siège de véhicule

(30) Priorität: 14.05.1999 DE 19922294
(43) Veröffentlichungstag der Anmeldung: 15.11.2000
(73) Patentinhaber: KEIPER GmbH & Co. KG, 67657 Kaiserslautern (DE)
(72) Erfinder: Mühlberger, Joachim, 67269 Grünstadt (DE)
(74) Vertreter: Patentanwälte Hosenthien-Held und Dr. Held

(56) Entgegenhaltungen:
- DE-A- 3 238 593
- DE-A- 4 318 943
- US-A- 2 261 504
- US-A- 3 759 587
- US-A- 4 842 318
- US-A- 5 222 814

## Beschreibung

Die Erfindung betrifft ein Sitzschienenpaar für einen Fahrzeugsitz, insbesondere für einen Kraftfahrzeugsitz, mit den Merkmalen des Oberbegriffs des Anspruches 1.

Aus der US 2,261,504 A ist ein Sitzschienenpaar dieser Art bekannt, bei dem die Oberschiene in der seitlich davon angeordneten Unterschiene gelagert und geführt ist, wobei zwei gleiche Kugeln zur Übertragung der Kräfte vorgesehen sind. Die Unterschiene weist in Fortsetzung einer Kugelaufnahme einen Befestigungswinkel auf, der zunächst seitlich herausgeführt und dann nach unten abgebogen ist. Ein oben und unten zu befestigendes Sitzschienenpaar mit zwei seitlichen, einander wechselseitig verkrallenden Bereichen ist aus der US 5,222,814 A bekannt.

Der Erfindung liegt die Aufgabe zu Grunde, ein Sitzschienenpaar der eingangs genannten Art zu verbessern, insbesondere hinsichtlich der Lastaufnahmefähigkeit und Sicherheit im Crashfall. Diese Aufgabe wird erfindungsgemäß durch einen Sitzschienenpaar mit den Merkmalen des Anspruches 1 gelöst. Vorteilhafte Ausgestaltungen sind Gegenstand der Unteransprüche. Ein Fahrzeugsitz mit wenigstens einem erfindungsgemäßen Sitzschienenpaar ist Gegenstand des Anspruches 9.

Dadurch, daß ein der Unterschiene zugeordneter erster Bereich und ein der Oberschiene zugeordneter erster Bereich einander wechselseitig verkrallen, verhaken sich die Sitzschienen im Crashfall und leiten die auf den Fahrzeugsitz wirkenden Kräfte sicher in die Fahrzeugstruktur weiter, wobei die Lastaufnahmefähigkeit durch zweite einander wechselseitig verkrallende Bereich und einen weiteren Verkrallungsbereich zwischen Unterschiene und Oberschiene erhöht wird. Die Lastaufnahmefähigkeit und damit die Sicherheit im Crashfall verbessert sich noch, wenn die wechselseitige Verkrallung sowohl nach oben als auch nach unten wirkt und damit sowohl Zugkräfte als auch Druckkräfte aufgenommen werden können. Um die Oberschiene nicht durch zu viele Umformungen zu schwächen, ist es von Vorteil, wenn die der Oberschiene zugeordneten Bereich für die wechselseitige Verkrallung als gesondertes, an der Oberschiene angebrachtes Bauteil ausgebildet sind.

Für den Normalgebrauch ist es von Vorteil, die Kräfte über Führungselemente, die zwischen den Sitzschienen angeordnet sind und in entsprechenden Aufnahmen der Sitzschienen liegen, zu übertragen. Durch die seitliche Befestigung der Unterschiene an der Fahrzeugstruktur, insbesondere wenn die Befestigung von einem Wandbereich zwischen den Aufnahmen aus erfolgt, ist es für eine bessere Übertragung der Kräfte von oben, insbesondere des Gewichts des Sitzbenutzers, von Vorteil, die obere Aufnahme zu stärken, indem das obere Führungselement größer als das untere Führungselement ist. Außerdem können die Kräfte mit weniger Reibung in die Fahrzeugstruktur geleitet werden. Dadurch wird das Material der Sitzschienen hinsichtlich Verformungen bzw. Abrieb geschont und die Führungseigenschaften verbessern sich.

In einer bevorzugten Ausführungsform ist die Oberschiene ebenfalls seitlich anbringbar, und zwar mittels eines seitlichen Wandbereichs an der Struktur des Sitzteiles des Fahrzeugsitzes, also am Sitzgestell. Die Oberschiene umgreift vorzugsweise die Unterschiene C-förmig, also auf etwas mehr als drei Seiten. Dadurch kann der Fahrzeugsitz, den die Sitzschienen tragen, noch tiefer gelegt werden, was insbesondere für Sportwagen vorteilhaft ist. Eine weitere verringerung der Bauhöhe kann dadurch erreicht werden, daß die einander verkrallenden Bereiche wenigstens teilweise seitlich der Führungselemente vorgesehen sind. Um dabei die Sicherheit im Crashfall zu erhöhen, sind vorzugsweise die Führungselemente mit ihren Aufnahmen zumindest nicht vollständig in die Verkrallungsbereiche mit einbezogen.

Das erfindungsgemäße Sitzschienenpaar kann bei einem beliebigen, vorzugsweise längseinstellbaren Fahrzeugsitz verwendet werden, insbesondere bei einem Vordersitz eines Kraftfahrzeuges. Das Sitzschienenpaar kann aber auch bei Rücksitzbänken oder Fluggastsitzen eingesetzt werden. Mit zwei erfindungsgemäßen Sitzschienenpaaren kann der Fahrzeugsitz besonders tief gelegt werden. Mit einem erfindungsgemäßen Sitzschienenpaar und einem anderen Sitzschienenpaar, das nicht seitlich befestigt ist, können horizontale Fertigungstoleranzen bei der Montage besser ausgeglichen werden.

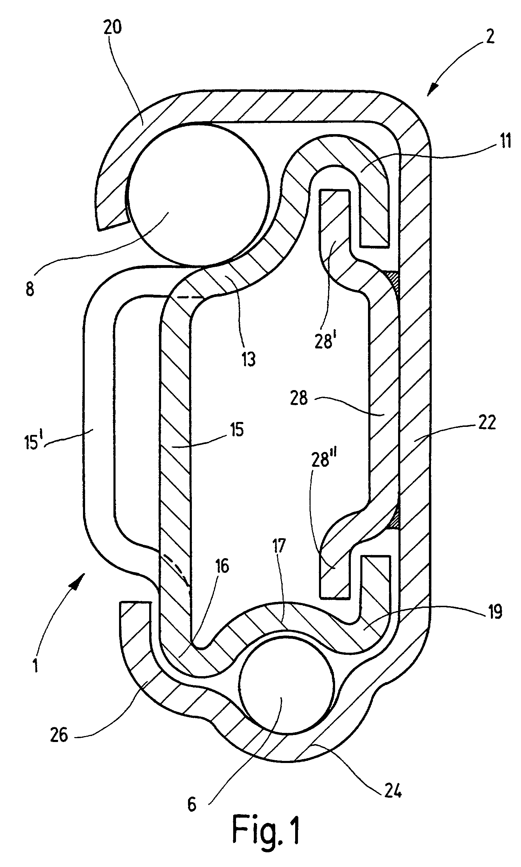

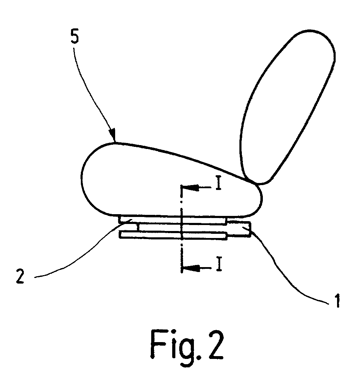

Im folgenden ist die Erfindung anhand eines in der Zeichnung dargestellten Ausführungsbeispiels näher erläutert. Es zeigen
- Fig. 1: einen Schnitt durch ein erfindungsgemäßes Sitzschienenpaar entlang der Linie I-I in Fig. 2, und
- Fig. 2: eine schematische Seitenansicht eines Fahrzeugsitzes mit erfindungsgemäßem Sitzschienenpaar.

Ein aus einer fahrzeugstrukturfesten Sitzschiene, im folgenden als Unterschiene 1 bezeichnet, und aus einer sitzstrukturfesten Sitzschiene, im folgenden als Oberschiene 2 bezeichnet, bestehendes Sitzschienenpaar ist jeweils auf der Längsseite eines Fahrzeugsitzes 5 für ein Kraftfahrzeug angeordnet. Richtungsangaben beziehen sich im folgenden auf die gewöhnliche Orientierung im Kraftfahrzeug. Jede Oberschiene 2 wird in der unten beschriebenen Weise von der zugehörigen Unterschiene 1 in Sitzlängsrichtung beweglich gelagert und geführt. Zwischen jeder Unterschiene 1 und der zugehörigen Oberschiene 2 sind in Längsrichtung mehrere untere Führungselemente 6 und mehrere obere Führungselemente 8 vorgesehen, in der Regel Kugeln, in Sonderfällen auch Rollen oder sich in Längsrichtung erstreckende Gleitstücke. Durch Verschieben der beiden Oberschienen 2 relativ zu den Unterschienen 1 ist der Fahrzeugsitz 5 in Längsrichtung einstellbar. Die zugehörige Verund Entriegelungsvorrichtung ist in der Zeichnung nicht dargestellt.

Die beiden Unterschienen 1 sind seitlich am Tunnel bzw. am Türschweller befestigt. Die beiden Oberschienen 2 sind seitlich am nicht näher dargestellten Sitzgestell des Fahrzeugsitzes 5 befestigt. Dadurch kann der Fahrzeugsitz 5 näher am Fahrzeugboden angeordnet werden. Bis auf später beschriebene Stellen zur Befestigung weisen die Unterschienen 1 über ihre Länge hinweg das gleiche Profil auf, welches näherungsweise C-förmig ist. Dabei sind die Unterschienen 1 zur Innenseite hin, also zu der von den Befestigungsstellen abgewandten Seite hin, geöffnet. Die Oberschienen 2 weisen ebenfalls über ihre Länge hinweg das gleiche, näherungsweise C-förmige Profil auf, welches zur Außenseite hin geöffnet ist. Sowohl die Unterschienen 1 als auch die Oberschienen 2 sind als Blechbiegeteile mit 2 mm Stärke ausgebildet. Sie können auch als Strangpreßprofile ausgeführt sein. Als untere und obere Führungselemente 6 bzw. 8 werden Stahlkugeln von 7 mm bzw. 9,5 mm Durchmesser eingesetzt, die jeweils innerhalb eines Käfigs angeordnet sind. Die Sitzschienenpaare auf beiden Seiten des Fahrzeugsitzes 5 sind im wesentlichen symmetrisch zueinander ausgebildet.

Jede Unterschiene 1 weist im Profil an ihrem oberen Rand auf der Innenseite einen kleinen, U-förmigen, oberen Verkrallungsbereich 11 auf, der nach unten geöffnet ist. An den oberen Verkrallungsbereich 11 schließt sich nach außen hin eine obere Aufnahme 13 für die oberen Führungselemente 8 an. Die obere Aufnahme 13 ist gegenüber dem oberen Verkrallungsbereich 11 nach unten gebogen, verläuft aber im wesentlichen horizontal. An die obere Aufnahme 13 schließt sich nach außen hin ein Wandbereich 15 an, der von der oberen Aufnahme 13 nach unten gebogen ist und im wesentlichen vertikal verläuft. Aus dem Wandbereich 15 sind in Längsrichtung der Unterschiene 1 stellenweise Befestigungsabschnitte 15' herausgebogen, mit denen die Unterschiene 1 an der Fahrzeugstruktur, beispielsweise am Tunnel oder am Türschweller, befestigt ist.

An den Wandbereich 15 schließt sich nach innen hin ein Vorsprungsbereich 16 an, der durch den unteren Rand des Wandbereichs 15 und die vom Wandbereich 15 aus wieder nach oben gebogene Materialpartie der Unterschiene 1 gebildet wird. An den Vorsprungsbereich 16 schließt sich nach innen hin eine untere Aufnahme 17 für die unteren Führungselemente 6 an. Die untere Aufnahme 17 ist gegenüber einem im wesentlichen horizontalen Verlauf leicht nach oben gewölbt. An die untere Aufnahme 17 schließt sich nach innen hin ein innerer unterer Verkrallungsbereich 19 an, der aus der gegenüber der unteren Aufnahme 17 nach oben gebogenen, den unteren Rand der Unterschiene 1 bildenden Materialpartie besteht.

Jede Oberschiene 2 weist im Profil an ihrem oberen Rand auf der Außenseite eine obere Aufnahme 20 auf, die oberhalb der oberen Aufnahme 13 der Unterschiene 1 angeordnet ist und deren äußerer Rand, welcher zugleich den äußeren Rand der Oberschienen 2 bildet, leicht nach unten gezogen ist, um das obere Führungselement 8 besser zu umgreifen. An die obere Aufnahme 20 schließt sich nach innen hin zunächst ein horizontal verlaufender Bereich oberhalb des oberen Verkrallungsbereichs 11 der Unterschiene 1 an. Von diesem horizontal verlaufenden Bereich biegt nach unten ein vertikal verlaufender Wandbereich 22 ab, der zur Befestigung des Sitzgestells des Fahrzeugsitzes 5 dient und der die Öffnung der Unterschiene 1 verschließt.

An den Wandbereich 22 schließt sich nach einer den inneren unteren Verkrallungsbereich 19 der Unterschiene 1 auf der Unterseite umrundenden Materialpartie nach außen hin eine untere Aufnahme 24 an, die leicht nach unten gewölbt ist, ansonsten im wesentlichen horizontal verläuft und der unteren Aufnahme 17 der Unterschiene 1 gegenüberliegt. An die untere Aufnahme 24 schließt sich nach außen hin ein Umgreifungsbereich 26 an, der den Vorsprungsbereich 16 der Unterschiene 1 auf dessen Unterseite umrundet und in dem leicht nach oben gezogenen unteren Rand der Oberschiene 2 endet. Die Oberschiene 2 umgreift also mit ihrem ungefähr C-förmigen Profil die Unterschiene 1. Der Wandbereich 15 der Unterschiene 1, insbesondere im Bereich der Befestigungsabschnitte 15', wird aber nicht bedeckt.

Am Wandbereich 22 der Oberschiene 2 ist auf der Seite, welche der eingeschlossenen Unterschiene 1 zugewandt ist, ein gesondertes Verkrallungsteil 28 angebracht, beispielsweise angeschweißt, welches die gleiche Länge wie die Oberschiene 2 aufweist. Von dem mit dem Wandbereich 22 verbundenen Bereich herausgebogen weist das Verkrallungsteil 28 nach oben einen oberen Verkrallungsbereich 28' und nach unten einen unteren Verkrallungsbereich 28" auf. Der obere Verkrallungsbereich 28' ist mit seinem Rand innerhalb des oberen Verkrallungsbereichs 11 der Unterschiene 1 angeordnet, während der obere Verkrallungsbereich 11 der Unterschiene 1 mit seinem Rand zwischen dem oberen Verkrallungsbereich 28' des Verkrallungsteils 28 und dem Wandbereich 22 der Oberschiene 2 angeordnet ist, so daß eine wechselseitige Verkrallung erfolgt. Diese wechselseitige Verkrallung wirkt sowohl nach oben als auch nach unten.

Der untere Verkrallungsbereich 28" ist mit seinem Rand innerhalb des inneren unteren Verkrallungsbereichs 19 der Unterschiene 1 und des Übergangsbereichs zu deren unterer Aufnahme 17 angeordnet, während der innere untere Verkrallungsbereichs 19 der Unterschiene 1 mit seinem Rand zwischen dem unteren Verkrallungsbereich 28" des Verkrallungsteils 28 und dem Wandbereich 22 der Oberschiene 2 angeordnet ist, so daß ebenfalls eine wechselseitige Verkrallung erfolgt, die sowohl nach oben als auch nach unten wirkt.

Im Normalgebrauch werden die auftretende Kräfte zwischen Oberschiene 2 und Unterschiene 1 über die Führungselemente 6 und 8 übertragen. Durch die seitliche Anbringung muß dabei das obere Führungselement 8 die Last, beispielsweise das Gewicht des Sitzbenutzers, aufnehmen und auf die Unterschiene 1 übertragen, wo sie dann über die Befestigungsabschnitte 15' des Wandbereichs 15 in die Fahrzeugstruktur weitergeleitet wird. Das untere Führungselement 6 leitet am Fahrzeugsitz 5 angreifende, nach oben wirkende Zugkräfte weiter. Daher weist das obere Führungselement 8 einen größeren Durchmesser für eine bessere Übertragung der Kräfte, beispielsweise durch größere Anlageflächen, und für einen geringeren Rollwiderstand auf. Für eine nahezu spielfreie Führung sind die Führungselemente 6 und 8 unter Vorspannung eingebaut. Zur Verriegelung der Schienen 1 und 2 relativ zueinander in Längsrichtung ist beispielsweise eine in der Zeichnung nicht dargestellte Schienenverriegelungskralle vorgesehen, welche im verriegelten Zustand in horizontaler Richtung von der Unterschiene 1 zur Oberschiene 2 hin die Verkrallungsbereiche 28' und 11 sowie 28" und 19 durchdringt und zum Entriegeln zum Wandbereich 15 zurückgezogen wird.

Die verschiedenen Verkrallungsbereiche, zu denen auch der mit dem Vorsprungsbereich 16 zusammenwirkende Umgreifungsbereich 26 zählt, sorgen im Crashfall für eine sichere Verhakung zwischen Oberschiene 2 und Unterschiene 1 und damit für eine sichere Befestigung des Fahrzeugsitzes 5. Bei nach unten wirkenden Kräften kann sich die Oberschiene 2 auch mit ihrem oberen, horizontal verlaufenden Bereich auf dem oberen Verkrallungsbereich 11 der Unterschiene 1 abstützen.

In einer abgewandelten Ausführungsform ist die äußere Oberschiene 2 fahrzeugstrukturfest, während die innere Unterschiene 1 sitzstrukturfest ist. Für eine gute Lastaufnahme ist dann vorzugsweise das untere Führungselement größer als das obere Führungselement.

### Bezugszeichenliste

- 1: Unterschiene
- 2: Oberschiene
- 5: Fahrzeugsitz
- 6: unteres Führungselement
- 8: oberes Führungselement
- 11: oberer Verkrallungsbereich (der Unterschiene)
- 13: obere Aufnahme (der Unterschiene)
- 15: Wandbereich (der Unterschiene)
- 15': Befestigungsabschnitt
- 16: Vorsprungsbereich
- 17: untere Aufnahme (der Unterschiene)
- 19: innerer unterer Verkrallungsbereich
- 20: obere Aufnahme (der Oberschiene)
- 22: Wandbereich (der Oberschiene)
- 24: untere Aufnahme (der Oberschiene)
- 26: Umgreifungsbereich
- 28: Verkrallungsteil
- 28': oberer Verkrallungsbereich (des Verkrallungsteils)
- 28": unterer Verkrallungsbereich (des Verkrallungsteils)

## Patentansprüche

1. Sitzschienenpaar für einen Fahrzeugsitz, insbesondere für einen Kraftfahrzeugsitz, mit einer Oberschiene (2), die am Fahrzeugsitz (5) anbringbar ist, und einer Unterschiene (1) zur Lagerung und Führung der Oberschiene (2), wobei die Unterschiene (1) seitlich angeordnete Befestigungsabschnitte (15') zur Anbringung an der Fahrzeugstruktur aufweist, **dadurch gekennzeichnet, daß** ein der Unterschiene (1) zugeordneter erster Bereich (11) und ein der Oberschiene (2) zugeordneter erster Bereich (28') sowie ein der Unterschiene (1) zugeordneter zweiter Bereich (19) und ein der Oberschiene (2) zugeordneter zweiter Bereich (28") einander jeweils wechselseitig verkrallen, wobei noch ein weiterer Verkrallungsbereich (16, 26) zwischen Unterschiene (1) und Oberschiene (2) vorgesehen ist.

2. Sitzschienenpaar nach Anspruch 1, **dadurch gekennzeichnet, daß** die wechselseitige Verkrallung sowohl nach oben als auch nach unten wirkt.

3. Sitzschienenpaar nach Anspruch 2, **dadurch gekennzeichnet, daß** die einander wechselseitig verkrallenden ersten Bereiche (11, 28') oberhalb der zweiten Bereiche (19, 28") vorgesehen sind.

4. Sitzschienenpaar nach einem der Ansprüche 1 bis 3, **dadurch gekennzeichnet, daß** die der Oberschiene (2) zugeordneten ersten und zweiten Bereiche (28', 28") für die wechselseitige Verkrallung als gesondertes, an der Oberschiene (2) angebrachtes Bauteil (28) ausgebildet sind.

5. Sitzschienenpaar nach einem der Ansprüche 1 bis 4, **dadurch gekennzeichnet, daß** wenigstens ein oberes Führungselement (8), das zwischen einer oberen Aufnahme (20) der Oberschiene (2) und einer oberen Aufnahme (13) der Unterschiene (1) angeordnet ist, und wenigstens ein unteres Führungselement (6), das zwischen einer unteren Aufnahme (24) der Oberschiene (2) und einer unteren Aufnahme (17) der Unterschiene (1) angeordnet ist, vorgesehen ist und die seitlich angeordneten Befestigungsabschnitte (15') der Unterschiene (1) in einem Wandbereich (15) zwischen der oberen Aufnahme (13) und der unteren Aufnahme (17) ausgebildet sind.

6. Sitzschienenpaar nach Anspruch 5, **dadurch gekennzeichnet, daß** das obere Führungselement (8) größer als das untere Führungselement (6) ist.

7. Sitzschienenpaar nach einem der Ansprüche 1 bis 6, **dadurch gekennzeichnet, daß** die Oberschiene (2) seitlich befestigt ist.

8. Sitzschienenpaar nach einem der Ansprüche 1 bis 7, **dadurch gekennzeichnet, daß** die Oberschiene (2) die Unterschiene (1) C-förmig umgreift.

9. Fahrzeugsitz, insbesondere Kraftfahrzeugsitz, mit wenigstens einem Sitzschienenpaar nach einem der Ansprüche 1 bis 8.

## Claims

1. Pair of seat rails for a vehicle seat, in particular for a motor vehicle seat, having an upper rail (2) which can be fitted to the vehicle seat (5) and a lower rail (1) for supporting and guiding the upper rail (2), the lower rail (1) having laterally arranged securing portions (15') for being fitted to the vehicle structure, **characterised in that** a first region (11) associated with the lower rail (1) and a first region (28') associated with the upper rail (2) and a second region (19) associated with the lower rail (1) and a second region (28") associated with the upper rail (2) mutually engage in each other, another engaging region (16, 26) further being provided between the lower rail (1) and the upper rail (2).

2. Pair of seat rails according to claim 1, **characterised in that** the mutual engagement acts both upwards and downwards.

3. Pair of seat rails according to claim 2, **characterised in that** the first regions (11, 28'), which mutually engage in each other, are provided above the second regions (19, 28").

4. Pair of seat rails according to any one of claims 1 to 3, **characterised in that** the first and second regions (28', 28") for the mutual engagement, which regions (28', 28") are associated with the upper rail (2), are in the form of a separate component (28) fitted to the upper rail (2).

5. Pair of seat rails according to any one of claims 1 to 4, **characterised in that** there are provided at least one upper guide element (8), which is arranged between an upper receiving member (20) of the upper rail (2) and an upper receiving member (13) of the lower rail (1), and at least one lower guide element (6), which is arranged between a lower receiving member (24) of the upper rail (2) and a lower receiving member (17) of the lower rail (1), and the laterally arranged securing portions (15') of the lower rail (1) are formed in a wall region (15) between the upper receiving member (13) and the lower receiving member (17).

6. Pair of seat rails according to claim 5, **characterised in that** the upper guide element (8) is larger than the lower guide element (6).

7. Pair of seat rails according to any one of claims 1 to 6, **characterised in that** the upper rail (2) is secured laterally.

8. Pair of seat rails according to any one of claims 1 to 7, **characterised in that** the upper rail (2) extends round the lower rail (1) in a C-shaped manner.

9. Vehicle seat, in particular a motor vehicle seat, having at least one pair of seat rails according to any one of claims 1 to 8.

## Revendications

1. Paire de glissières de siège pour un siège de véhicule, en particulier pour un siège de véhicule automobile, présentant un rail supérieur (2) qui est apte à être monté sur un siège du véhicule (5), et un rail inférieur (1) pour le logement et le guidage du rail supérieur (2), le rail inférieur (1) présentant des sections de fixation (15') disposées latéralement pour le montage sur la structure du véhicule, **caractérisée par le fait qu'**une première zone (11) associée au rail inférieur (1) et une première zone (28') associée au rail supérieur (2), ainsi qu'une deuxième zone (19) associée au rail inférieur (1) et une deuxième zone (28 ") associée au rail supérieur (2) s'accrochent l'une l'autre de façon réciproque, respectivement, une autre zone d'accrochage (16, 26) entre le rail inférieur (1) et le rail supérieur (2) étant encore prévue.

2. Paire de glissières de siège selon la revendication 1, **caractérisée par le fait que** l'accrochage réciproque s'effectue non seulement vers le haut mais encore vers le bas.

3. Paire de glissières de siège selon la revendication 2, **caractérisée par le fait que** les premières zones (11, 28') s'accrochant l'une l'autre de façon réciproque sont prévues au-dessus des deuxièmes zones (19, 28'').

4. Paire de glissières de siège selon l'une quelconque des revendications 1 à 3, **caractérisée par le fait que** les première et deuxième zones (28', 28''), associées au rail supérieur (2) sont réalisées pour l'accrochage mutuel sous la forme d'un élément de structure (28) séparé, monté sur le rail supérieur (2).

5. Paire de glissières de siège selon l'une quelconque des revendications 1 à 4, **caractérisée par le fait qu'**il est prévu au moins un élément de guidage supérieur (8), qui est disposé entre un logement supérieur (20) du rail supérieur (2) et un logement supérieur (13) du rail inférieur (1), et au moins un élément de guidage inférieur (6), qui est disposé entre un logement inférieur (24) du rail supérieur (2) et un logement inférieur (17) du rail inférieur (1) et **par le fait que** les sections de fixation (15'), disposées latéralement, du rail inférieur (1) sont formées dans une zone de paroi (15) entre le logement supérieur (13) et le logement inférieur (17).

6. Paire de glissières de siège selon la revendication 5, **caractérisée par le fait que** l'élément de guidage supérieur (8) est plus grand que l'élément de guidage inférieur (6).

7. Paire de glissières de siège selon l'une quelconque des revendications 1 à 6, **caractérisée par le fait que** le rail supérieur (2) est fixé latéralement.

8. Paire de glissières de siège selon l'une quelconque des revendications 1 à 7, **caractérisée par le fait que** le rail supérieur (2) enveloppe sous la forme d'un C le rail inférieur (1).

9. Siège de véhicule, en particulier siège de véhicule automobile, présentant au moins une paire de glissières de siège telle que définie à l'une quelconque des revendications 1 à 8.
